**Europäisches Patentamt**

**European Patent Office**

**Office européen des brevets**

(11) Veröffentlichungsnummer: **0 085 821**

**B1**

(12) **EUROPÄISCHE PATENTSCHRIFT**

(45) Veröffentlichungstag der Patentschrift:
**20.05.87**

(21) Anmeldenummer: **82730010.4**

(22) Anmeldetag: **10.02.82**

(51) Int. Cl.⁴: **C 10 B 53/00, C 10 J 3/66, C 10 J 3/58**

(54) Verfahren zur wirtschaftlichen und umweltfreundlichen Nutzung von Bio-Masse.

(43) Veröffentlichungstag der Anmeldung:
**17.08.83 Patentblatt 83/33**

(45) Bekanntmachung des Hinweises auf die Patenterteilung:
**20.05.87 Patentblatt 87/21**

(84) Benannte Vertragsstaaten:
**AT CH FR GB IT LI NL SE**

(56) Entgegenhaltungen:
**EP-A-0 001 856**
**EP-A-0 016 585**
**DE-A-1 496 366**
**DE-A-2 639 165**
**DE-A-2 649 669**
**DE-A-3 030 593**
**DE-C-439 884**
**FR-A-889 862**
**FR-A-2 269 029**
**US-A-4 142 867**

(73) Patentinhaber: **Michel- Kim, Herwig, Bamberger Strasse 41, D-1000 Berlin 30 (DE)**

(72) Erfinder: **Michel- Kim, Herwig, Bamberger Strasse 41, D-1000 Berlin 30 (DE)**

(74) Vertreter: **Meinig, Karl- Heinz, PATENTANWÄLTE- PFENNING- MAAS- MEINIG- SPOTT Kurfürstendamm 170, D-1000 Berlin 15 (DE)**

## Beschreibung

Die Erfindung bezieht sich auf ein Verfahren und eine Vorrichtung zur wirtschaftlichen und umweltfreundlichen Nutzung von Bio-Masse, wie Agrar- und Forstabfällen, und von organischen Abfällen, wie Altreifen, Kunststoffe, Papier und dergleichen.

Die wirtschaftliche und umweltfreundliche Nutzung von Bio-Masse und organischen Abfällen gehört zu den wichtigsten Problemen der Menschheit, insbesondere auch in Entwicklungsländern, wo feste Brennstoffe, wie Kohle oder flüssige Brennstoffe, wie Öle und zum Betrieb von Antriebsorganen dienende Generatorgase in der Regel nicht zur Verfügung stehen. Eine ähnliche Problematik ergibt sich auch für die westliche Welt, da die Energieträger geringer werden. Bio-Massen in Form von Agrar- oder Forstabfällen und organische Abfälle stehen in der Regel zur leicht greifbaren Verfügung.

Es ist eine Vielzahl von Verfahren und Vorrichtungen bekannt, mit denen aus Abfällen wieder verwendbare Brennstoffe gewonnen werden. Alle diese Verfahren weisen den gemeinsamen Nachteil auf, daß entweder der Wirkungsgrad gering ist oder die gewonnenen Brennstoffe, beispielsweise Gas zu sehr verunreinigt waren. Aus der DE-A- 26 39 165 ist ein Verfahren und eine Vorrichtung zur wirtschaftlichen und umweltfreundlichen Verwendung von land- oder forstwirtschaftlicher Erzeugung stammender Reststoffe bekannt, bei dem aus den Reststoffen Brenngas erzeugt wird, das als Mischungsbestandteil eines zündfähigen Gemisches einer motorischen Verbrennung unter Entwicklung mechanischer Energie unterworfen wird. In einer anderen Ausführungsform werden die Reststoffe mittels Pyrolyse in festen Kohlenstoff, kondensierbare Kohlenwasserstoffe und Permanentgase zerlegt und die Zersetzungsprodukte ihrerseits nutzbar gemacht. Die US-A-41 42 867 beschreibt eine Vorrichtung zur Herstellung von Brenngas aus Abfallstoffen und anderen brennbaren Stoffen, bei der die Stoffe getrocknet werden, ihre brennbaren Teile einer Pyrolyse bei niedriger Temperatur unterworfen werden und die Schwelgase in einem heißen Reaktionsbett in Brenngas umgewandelt werden. Die Pyrolyse erfolgt bei 300° bis 600°C unter Ausschluß von Luft und die Schwelgase werden durch das Reaktionsbett bei einer Temperatur zwischen 1000°C und 1200°C geführt.

Der Erfindung liegt die Aufgabe zugrunde, ein Verfahren und eine Vorrichtung zur wirtschaftlichen und umweltfreundlichen Nutzung von Bio-Masse und organischen Abfällen zu schaffen, mit denen die Erzeugung von Generatorgas mit großer Reinheit bei einem guten Wirkungsgrad ermöglicht wird. Diese Aufgabe wird erfindungsgemäß bei einem Verfahren nach dem Oberbegriff des Hauptanspruchs durch die in seinem kennzeichnenden Teil angegebenen Merkmale und bei einer Vorrichtung durch die Merkmale des Unteranspruchs 5 gelöst.

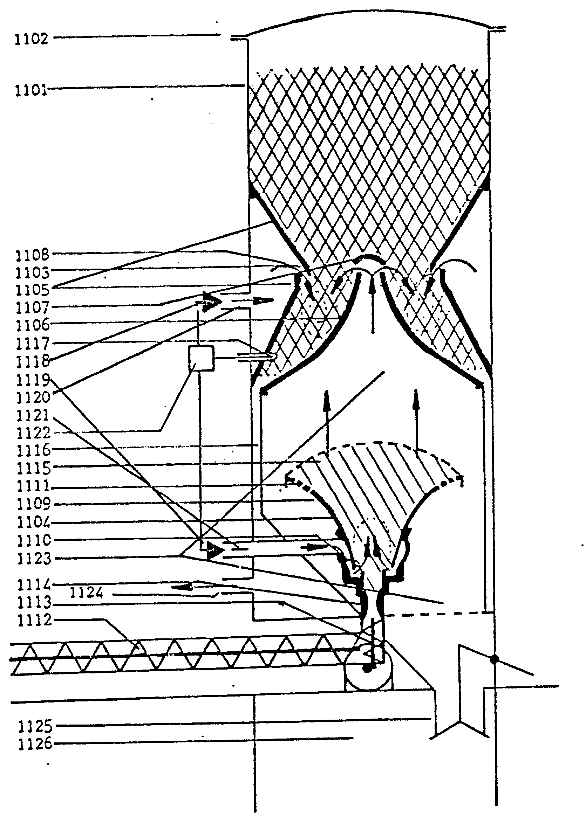

Durch das erfindungsgemäße Verfahren und die Vorrichtung wird ein Generatorgas mit großer Reinheit erzielt. Darüber hinaus kann über die temperaturabhängige Regelung der Luft in die sekundäre Reaktionsstufe der Koksverbrauch minimiert und zugleich der Heizwert des Gases optimiert werden. Dadurch, daß sowohl eine Vergasung als auch eine Pyrolyse in der ersten Reaktionsstufe durchgeführt werden kann, wird die Möglichkeit einer gekoppelten Pyrolyse-Koksproduktion zur Verfügung gestellt, so daß Holzkohle oder dergleichen als Koppelprodukt gewonnen werden kann, wenn der Betreiber gegenüber dem eigenen Gasbedarf einen Überschuß an Biomaterial hat. Durch die in den Unteransprüchen angegebenen Maßnahmen sind vorteilhafte Weiterbildungen und Verbesserungen möglich. Durch die Wärmerückführung über die aus der zweiten Reaktionsstufe austretenden Gase, die radialsymmetrisch durch einen Ringkanal nach unten abgezogen werden, werden die Wärmeverluste minimiert, so daß ein hoher Vergasungs- bzw. Pyrolysewirkungsgrad erzielt wird. Das Verfahren wird anhand der in der Zeichnung dargestellten Vorrichtung und der nachfolgenden Beschreibung näher erläutert. Die einzige Figur zeigt einen Schnitt durch einen Gasgenerator für zerkleinerte Biomaterialien bzw. organische Abfälle und Kohle.

Der in der Figur dargestellte Gasgenerator besteht aus einem Blechmantel 1101 mit einem Sicherheitsdeckel 1102, in den ein Trichtervergaser 1104 für kleinstückiges Gut und ein Biokohlenvergaser 1103 übereinanderliegend eingebaut sind.

Der Biokohlenvergaser 1103 weist zwei ringförmige, mit Keramik beschichtete Einsätze 1105 auf, die den Biokohlenvergaser 1103 in seinem unteren Drittel verengen. Von unten her ist ein aufgeweiteter Kegel 1106 mit Keramikbeschichtung, die eine hohe Wärmerückstrahlung hat, eingesetzt. Über der Trichteröffnung ist mit Abstand eine Keramikkappe 1107 angeordnet. Der Biokohlenvergaser 1103 weist die seitliche Luftzuführung 1108 auf, wobei die Luft durch eine Ringöffnung zwischen den zwei Einsätzen 1105 in die Brennzone gelangt.

Der Trichtervergaser 1104 für kleinstückiges Gut besteht aus einem gußeisernen Trichter 1109, der in ein Luftzufuhrsystem 1110 eingesetzt ist, das ebenfalls aus Guß besteht.

Das Luftzufuhrsystem ist innen mit einem Keramikteil versehen. Der gußeiserne Trichter hat ebenfalls einen Keramikeinsatz im unteren Teil. Im oberen Bereich hat der Trichter 1109 Löcher 1111, aus denen die Asche entweichen kann.

Die Materialzufuhr erfolgt mit einer horizontalen Schnecke 1112, die das Gut aus einem Silo herbeiführt, und einer vertikalen Preßschnecke 1113, die das Gut durch eine Verengung 1114 von unten in den Trichter 1109 gasdicht einpreßt. Auf dem Trichter sitzt ein Lochblech aus hochtemperaturfestem Stahl 1115. Dieses Lochblech 1115 verhindert das Herausfliegen von leichtem Gut, bewirkt eine leichte Verdichtung im Trichter und dient zugleich der Füllstandsregelung.

Die Generatorgase werden aus dem Biokohlenvergaser 1103 seitlich, durch Leitorgane 1116 geführt, nach unten abgezogen und an den Wänden des Trichtervergasers 1104 vorbeigeführt.

Bei Inbetriebnahme wird zunächst der Biokohlenvergaser 1103 angefeuert. Wenn der Vergaser eine bestimmte Temperatur erreicht hat, die mit dem Thermoelement 1117 gemessen wird, wird der Trichtervergaser 1104 durch die Ansaugöffnung angefeuert.

Die Koordination der Vergasung in beiden Teilvergasern verläuft wie folgt:

Über die Temperaturmessung werden die Drosseln 1118 und 1119 in den beiden Ansaugkanälen 1120 und 1121 durch eine Regeleinrichtung 1122 so geregelt, daß die Temperatur im Biokohlenvergaser 1103 einem Solltemperaturbereich entspricht. Bei kleiner Gasabnahme erfolgt die Luftzufuhr vor allen im Biokohlenvergaser 1103. Die Luftzufuhr 1121 wird gerade so weit offengehalten, daß die Brennzone im Trichtervergaser 1104 stabil bleibt. Bei höherer Gasabnahme wird die Luftzufuhr 1120 zum Biokohlenvergaser 1103 so weit gedrosselt, daß die Temperatur im Sollbereich bleibt. Die Luft wird dann vor allem in den Trichtervergaser 1104 gesaugt.

Der Trichtervergaser 1104 wird durch die Preßschnecke 1113 immer gefüllt gehalten. Die Regelung erfolgt über das Lochblech 1115. Wenn das Lochblech durch das eingepreßte Material über einen bestimmten Wert angehoben wird, wird die Schnecke 1113 abgestellt, wenn es unter einen bestimmten Wert fällt, wird die Schnecke 1113 angestellt.

In dem Trichtervergaser 1104 kann praktisch alles kohlenstoffhaltige Material vergast werden, sofern es trocken genug ist und sich durch die Schnecken fördern läßt. Das Material vergast sehr unvollkommen mit hohen Anteilen an kondensierbaren Bestandteilen und $CO_2$ und Wasser.

Die entstehende Asche wird zum Teil aus den Öffnungen 1111 herausgedrückt. Ein anderer Teil wird mit dem Gas mitgerissen und fällt dann in der sehr aufgeweiteten Kammer 1123 nach unten und kann dort regelmäßig entnommen werden.

Das Gas tritt durch den aufgeweiteten Kegel 1106 mit der Keramikkappe 1107 in den Biokohlenvergaser 1103 und wird dort aufgespalten.

Bei kleiner Lastabnahme stammt die Energie vor allem aus dem Biokohlenvergaser 1103. Entsprechend nimmt der Biokohlenvorrat langsam ab und muß ergänzt werden. Bei größerer Lastabnahme stammt die Energie vor allem aus dem Trichtervergaser 1104. Durch den Teeranteil regeneriert sich der Biokohlenvergaser 1103, so daß er bei experimentell zu bestimmenden Temperaturen hinsichtlich des Biokohlenverbrauchs nahezu stationär betrieben werden kann.

Das weitgehend teer- und essigsäurefreie Generatorgas wird am Auslaß 1124 entnommen und einem Kühlungs- und Reinigungssystem zugeführt. Die Kühlung sollte vor allem im Silo erfolgen, aus dem das zu vergasende Gut entnommen wird. Mit der Abwärme kann eine sehr weitgehende Vortrocknung erreicht werden.

Der Generator kann alternativ im Mischbetrieb auch zur Biokohlenerzeugung genutzt werden, wenn als Brennstoff für den Trichtervergaser Biomaterial zugeführt wird. Die Luftzufuhr 1121 zum Trichtervergaser 1104 wird dann nur in der Anheizphase geöffnet. Anschließend wird sie verschlossen. Dann erfolgt im Trichtervergaser 1104 nur eine Pyrolyse, die von der Abwärme des Biokohlenvergasers 1103 getragen wird. Die Regelung des Lochbleches 1115 wird dann abgestellt, so daß das verkohlte Gut das Lochblech 1115 anheben kann und über den Rand des Trichters 1109 in die Kammer 1123 fällt. Dort kann das Material noch weiter verkohlen. Nach einer gewissen Zeit wird die Biokohle dann über einen Verschluß 1125 in einen Bunker 1126 entleert.

Die Zufuhr des Biomaterials über die Schnecken 1112, 1113 wird wieder über die Temperatur geregelt. So wird gerade soviel Biomaterial zugeführt, daß die Temperatur in einem Sollbereich liegt. Der Biokohlenvergaser 1103 kann dann wieder hinsichtlich des Biokohlenverbrauchs stationär betrieben werden.

Bei plötzlichen Lastanforderungen kann durch einen Impuls die Schneckenzufuhr in Betrieb gesetzt werden, auch wenn die Temperatur im Biokohlenvergaser 1103 noch keine signifikante Erhöhung zeigt. Hierdurch kann kurzfristig der Heizwert des Gases erhöht werden.

Je nach Trockenheit des Biomaterials lassen sich in diesem Mischbetrieb etwa die vierfache Menge an Biokohle im Vergleich zum Heizwert des abgegebenen Generatorgases erzeugen. Das Generatorgas kann durch den Mischbetrieb einen erheblich höheren Heizwert haben, doch ist die Gesamtgasleistung des Generators niedriger als im reinen Generatorbetrieb.

**Patentansprüche**

1. Verfahren zur wirtschaftlichen und umweltfreundlichen Nutzung von Bio-Masse, wie Agrar- und Forstabfällen und von organischen Abfällen, wie Altreifen, Kunststoffe und Papier, als Brennstoff, bei dem der Brennstoff im Wege der Pyrolyse und/oder Vergasung zu Kohle und/oder Gasen veredelt werden, dadurch gekennzeichnet, daß in einer primären Reaktionsstufe die Pyrolyse und/oder Vergasung des Brennstoffes erfolgt und daß die entstehenden Schwelgase ins Zentrum einer als Koksvergaser ausgebildeten sekundären Reaktionsstufe zugeführt und mit Hilfe von Luft gespalten werden, wobei die Luft in die sekundäre Reaktionsstufe in Gleichstrom mit Schwelgasen und Koks und in Abhängigkeit von der Temperatur im glühenden Koksbett der sekundären Reaktionsstufe zugeführt wird, daß die Pyrolyse und/oder Vergasung abhängig vom Verbrauch des Brennstoffs in der ersten Reaktionsstufe durchgeführt wird, wobei eine Regelung der Brennstoffzufuhr über die Temperatur der austretenden Gase und/oder über eine Vorrichtung zur kontinuierlichen Erfassung des Füllstandes erfolgt und daß die aus der zweiten Reaktionsstufe austretenden Gase radialsymmetrisch durch einen Ringkanal nach unten abgezogen werden.

2. Verfahren nach Anspruch 1, dadurch gekennzeichnet, daß zur Vergasung des Brennstoffes in der primären Reaktionsstufe Luft direkt in den frisch eingeführten Brennstoff eingelassen wird, die abhängig von der Temperatur in der sekundären Reaktionsstufe geregelt wird, und daß die Vergasung im Gleichstrom von Luft und Brennstoff erfolgt.

3. Verfahren nach Anspruch 1, dadurch gekennzeichnet, daß zur Erzeugung von Bio-Kohle Luft in die primäre Reaktionsstufe nur in der Anheizphase eingeführt wird und daß die stattfindende Pyrolyse durch die Wärme des aus der sekundären Reaktionsstufe abgezogenen Gases getragen wird.

4. Verfahren nach einem der Ansprüche 1 bis 3, dadurch gekennzeichnet, daß der Brennstoff von unten in die primäre Reaktionsstufe eingeführt wird.

5. Vorrichtung zur Durchführung des Verfahrens nach Anspruch 1, dadurch gekennzeichnet, daß in einem durch einen Deckel (1102) dichtend verschließbaren Blechmantel (1101) ein Biokohlenvergaser (1103) und ein Trichtervergaser (1104) für kleinstückiges Gut angeordnet sind, daß der Trichtervergaser aus einem in ein Luftzuführungssystem (1110) eingesetzten gußeisernen Trichter (1109) besteht, der in seinem oberen Bereich mit Löchern (1111) zum Austritt von Asche ausgestattet ist, daß unterhalb des Trichters (1109) eine der Zuführung des Brennstoffes dienende Schnecke (1112, 1113) angeordnet ist, daß auf dem Trichter (1109) ein das Austreten des Biogutes verhinderndes Lochblech (1115) angeordnet ist, daß an den Wänden des Trichtervergasers (1109) Leitorgane (1116) zur Führung der aus dem Biokohlenvergaser austretenden Generatorgase vorgesehen sind, daß dem Biokohlenvergaser (1103) ein Thermoelement (1117) zur Anfeuerung des Trichtervergasers (1109) und zur Steuerung der in den Ansaugkanälen (1120, 1121) zugeordneten Drosseln (1118, 1119) mittels eines Regelorganes (1122) zugeordnet ist.

6. Vorrichtung nach Anspruch 5, dadurch gekennzeichnet, daß das Lochblech (1115) zur Füllstandsregelung dient und die Zuführung des Brennstoffes durch die Preßschnecke (1113) abhängig von der Stellung des Lochblechs (1115) erfolgt.

## Claims

1. Process for economic and ecologically harmless utilisation of bio-mass, such as agricultural and forestry waste, and of organic waste such as scrap tyres, plastics and papers, as fuel, in wich the fuel in the curse of pyrolysis and/or gasification is rrefined to carbon and/or gases, characterised in that the pyrolysis and/or gasification is carried out in a primary reaction stage and that the gases released thereby are passed into the middle of a secondary reaction stage formed as a coking oven and cracked with the help of air, in which the air is fed into the second reaction stage in common current with the released gases and coke and in dependence upon the temperature in the glowing coke bed in the secondary reaction stage, that the pyrolysis and/or gasification is carried out in dependence upon the consumption of the fuel in the first reaction stage, in which a control of the input of fuel is effected according to the temperature of the gases driven off and/or by a device for continuously determining the loading and that the gases driven off from the second reaction stage are drawn off radially symmetrically downwardly through an annular duct.

2. Process according to claim 1 characterised in the for the gasification of the fuel in the primary reaction stage, air is admitted directly into the freshly fed-in fuel, which is controlled in dependence upon the temperature in the secondary reaction stage, aand that the gasification is carried out in acommon current of air and fuel.

3. Process according to calim 1, characterised in that for the production of bio-coke, air is admitted into the primary reaction stage only in the heating-up phase and that the pyrolysis which occurs is supported by the heat of the gases drawn off from the secondary reaction stage.

4. Process according to any one of claims 1 to 3 characterised in that the fuel is fed into the primary raction stage from below.

5. Apparatus for carrying our the process according to claim 1, characterised in that a bio-coke gasifier (1103) and a funnel gasifier (1104) forfinely divided material are arranged in a metal casing (1101) wich can be sealed closed by a lid (1102), that the funnel gasifier comprises a cast-iron funnel (1109) set into an air supply system (1110), which funnel is provided in its upper part with openings (1111) for ash discharge, that a screw conveyor (1112, 1113) for feeding the fuel is arranged below the funnel (1109), that a perforated plate (1115) is arranged on the funnel restraining discharge of the bio-material, that conduits (1116) are provided on the walls of the funnel gasifier (1109) for the producer gas driven off from the bio-coke gasifier, that a thermoelement (1117) is arranged in the bio-coke gasifier (1103) for igniting the funnel gasifier (1109 and for controlling the throttles (1118, 1119) arranged in the suction channels (1120, 1121) by means of a control device (1122).

6. Apparatus according to claim 5, characterised in that the perforated plate (1115) serves to control the fill level and the feeding of the fuel through the screw conveyor (1113) is effected in dependence upon the position of the perforated plate (1115).

## Revendications

1. Procédé pour l'utilisation économique et non-polluante d'une "biomasse", telle que les déchets agricoles et forestiers et les déchets organiques tels que les pneus usés, les matières synthétiques et le papier, en tant que combustible transformé en charbon et/ou en gaz par pyrolyse ou gazéification, caractérisé en ce que la pyrolyse et/ou la gazéification s'effectue dans un premier étage de réaction, en ce que les gaz de distillation produits sont ensuite amenés au centre d'un second étage de réaction constitué par un gazéificateur au coke, et séparés au moyen d'air introduit en synchronisation avec les gaz et le coke et en fonction de la température du lit de coke, en ce que la pyrolyse et/ou la gazéification est régulée en fonction de la consommation de combustible du premier étape de réaction, selon la température des gaz sortants et/ou par l'intermediaire d'un système de détection permanente du niveau, et en ce que les gaz sortant du d'euxième étage de réaction sont extraits vers le bas à travers un conduit annulaire à symétrie radiale.

2. Procédé suivant la revendication 1, caractérisé en ce que, pour la gazéification du combustible dans le premier étage de réaction, l'air est injecté directement dans le combustible frais entrant, en fonction de la température régnant dans le deuxième étage de réaction, et en ce que la gazéification s'effectue entreles courants parallèles d'air et de combustible.

3. Procédé siuvant la revendication 1, caractérisé en ce que, pour la production de bio-carbon, l'air n'est introduit dans l'étage de réaction primaire que pendant la période d'échauffement, et en ce que la pyrolyse est alimentée par la chaleur du gaz extrait du deuxième étage de réaction.

4. Procédé suivant l'une des revendications 1 à 3, caractérisé en ce que le combustible est introduit dans l'étage de réaction primaire par le bas.

5. Dispositif de mise en oeuvre du procédé suivant la revendication 1, caractérisé en ce qu'un gazéificateur de bio-charbon (1103) et un gazéificateur en entonnoir (1104) pour particules de petites dimensions, sont disposés dans une enveloppe en tôle (1101) coiffée d'un couvercle étanche (1102), en ce que le gazéificateur en entonnoir est constitué d'un entonnoir en fonte (1109) inséré dans un système d'amenée d'air (1110) pourvu dans sa partie supérieure d'orifices (1111) de sortie des cendres, en ce qu'une vis sans fin (1112, 1113) d'alimentation en combustible est disposée sous l'entonnoir (1109), en ce qu'une tôle perforée (1115) empêchant la sortie de la bio-matière est disposée au-dessus de l'entonnoir (1109), en ce qu'il est prévu sur les parois du gazéificateur à entonnoir (1109) des organes de guidage (1116) des gaz sortant du gazéificateur de bio-charbon (1103), et en ce que celui-ci est pourvu d'un thermoélément (1117) assurant la mise à feu de gazéificateur (1109) et la régulation des étrangleurs (1118, 1119) des conduits d'aspiration (1120, 1121) au moyen du régulateur (1122).

6. Dispositif suivant la revendication 5, caractérisé en ce que la tôle perforée (1115) sert à la régulation du niveau et ence que l'alimentatioan en combustible est assurée parla vis sans fin (1113) en fonction de la position de la tôle perforée (1115).